# EUROPEAN PATENT SPECIFICATION

(11) **EP 4 415 405 B1**
(45) Date of publication and mention of the grant of the patent: **22.07.2026**
(21) Application number: 21959739.0
(22) Date of filing: 09.10.2021
(51) Int. Cl.: H04W 8/22, G01S 7/00, G01S 7/41, G01S 13/76, G01S 13/82, G01S 13/87, H04L 67/12, H04W 24/08, H04W 24/10, H04W 88/08, G01S 13/58, G01S 13/00, G01S 13/931

(54) **METHOD AND APPARATUS FOR PROVIDING SENSING SERVICE, COMMUNICATION DEVICE, AND STORAGE MEDIUM**
VERFAHREN UND VORRICHTUNG ZUR BEREITSTELLUNG EINES ERFASSUNGSDIENSTES, KOMMUNIKATIONSVORRICHTUNG UND SPEICHERMEDIUM
PROCÉDÉ ET APPAREIL SERVANT À FOURNIR UN SERVICE DE DÉTECTION, DISPOSITIF DE COMMUNICATION ET SUPPORT D'ENREGISTREMENT

(43) Date of publication of application: 14.08.2024
(73) Proprietor: Beijing Xiaomi Mobile Software Co., Ltd., Beijing 100085 (CN)
(72) Inventor: LIU, Jianning, Beijing 100085 (CN); SHEN, Yang, Beijing 100085 (CN)
(74) Representative: Gunzelmann, Rainer
(86) International application number: PCT/CN2021/122920
(87) International publication number: WO 2023/056649

(56) References cited:
- CN-A- 103 546 888
- CN-A- 112 262 610
- CN-A- 112 567 714
- CN-A- 112 738 758
- CN-A- 112 804 662
- CN-A- 113 115 341
- CN-A- 113 225 779
- KR-A- 20070 061 024
- VIVO: "Network based Sensing in R18", no. 20210908, 8 September 2021 (2021-09-08), XP052052500, Retrieved from the Internet <URL:https://ftp.3gpp.org/tsg_sa/TSG_SA/TSGS_93E_Electronic_2021_09/Docs/SP-211051.zip SP-211051_Network based Sensing in R18-vivo .pptx> [retrieved on 20210908]
- VIVO CHINA TELECOM CHINA UNICOM: "Introduction of network based Sensing in 5G Advanced", no. 20210730, 10 August 2021 (2021-08-10), XP052053654, Retrieved from the Internet <URL:https://ftp.3gpp.org/tsg_sa/WG2_Arch/TSGS2_146E_Electronic_2021-08/Docs/S2-2106008.zip S2-2106008_Introduction of network based sensing in 5G Advanced-vivo-r09.pptx> [retrieved on 20210810]
- "Study on Architecture Enhancement to support Sensing-based services", 3GPP DRAFT; S2-2106377, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 10 August 2021 (2021-08-10), Mobile Competence Centre ; 650, route des Lucioles ; F-06921 Sophia-Antipolis Cedex ; France, XP052054105
- XIAOMI: "New SID on Study on Sensing based services", 3GPP DRAFT; S2-2106378, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. E (e-meeting); 20210816 - 20210827, 10 August 2021 (2021-08-10), Mobile Competence Centre ; 650, route des Lucioles ; F-06921 Sophia-Antipolis Cedex ; France, XP052054106

## Description

### FIELD

The present invention relates to the technical field of wireless communication but is not limited to the technical field of wireless communication, and more particularly to a method for transmitting a sensing parameter and a method for transmitting a query result, a communication device, and a storage medium.

### BACKGROUND

With the development of the artificial intelligence (AI) technology, the intelligence of many industries has been greatly promoted. Among them, the sensing technology has become an important technical basis, for example, the radar-based technology is widely used in applications such as intelligent transportation and automatic driving. The current radar-based sensing technology relies on dedicated radar equipment, which is expensive and inflexible in deployment (usually arranged in specific scenarios).

In the era of mobile Internet, with the development of mobile communication, there will be a larger number of mobile terminals and mobile base stations in the future. With the emergence of new services, the demand for sensing is gradually increasing. For example, sensing service is used in the dark to perceive surrounding objects. For another example, indoor sensing for human motion commands is used to control smart furniture. The sensing service provides great convenience for daily life.
VIVO: "Network based Sensing in R18", 3GPP DRAFT; SP-211051, 3RD GENERATION PARTNERSHIP PROJECT (3GPP), 3GPP DRAFT; SP-211051, and VIVO: "Introduction of network based sensing in 5G Advanced", 3GPP DRAFT, S2-2106008 disclose a network architecture supporting network based sensing and a related overall procedure.
CN113115341A discloses a method for negotiating a wireless sensing process. The method comprises: sending a wireless sensing request message; and receiving a wireless sensing response message.
CN112738758A discloses a perception service management method: receiving a resource creation request message sent by an application unit; sending a resource creation response message to the application unit; constructing a perception starting message, and sending a perception starting message to a network service unit.
CN112804662A relates to a method for providing a WLAN sensing service including: sending a sensing service request frame to a terminal device SCS with a WLAN sensing capability, the sensing service request frame including a sensing service identifier; and receiving a sensing service response frame sent by the SCS.
"Study on Architecture Enhancement to support Sensing-based services", 3GPP Draft, S2-2106377 discloses that a receiver is aware of the sensing information of the target object by receiving reflections of the signal sent from the transmitter.
"New SID on Study on Sensing based services", 3GPP Draft, S2-2106377 discusses sensing based services.

### SUMMARY

The invention is set out in the appended set of claims.

According to a first aspect of embodiments of the present invention, a method for transmitting a sensing parameter, performed by a sensing function (SF), is provided. The method is defined by claim 1.

According to a second aspect of embodiments of the present invention, a method for transmitting a query result, performed by a user data management (UDM), is provided. The method is defined by claim 12.

According to a third aspect of embodiments of the present invention, a communication device is provided, including: a processor, a transceiver, a memory, and an executable program stored in the memory and capable of being executed by the processor. The executable program is executed by the processor to perform the method according to the first aspect or the second aspect.

According to a fourth aspect of embodiments of the present invention, there is provided a computer storage medium having stored therein an executable program that, when said program is run on a communication device of the third aspect, enable the communication device to perform the method according to the first aspect or the second aspect.

It is to be understood that both the foregoing general description and the following detailed description are illustrative and explanatory only and are not intended to limit the present invention.

### BRIEF DESCRIPTION OF THE DRAWINGS

The accompanying drawings, which are incorporated in and constitute a part of this specification, illustrate embodiments consistent with the present invention and, together with the description, serve to explain the principles of the present invention.
FIG. 1 is a schematic diagram of a wireless communication system.
FIG. 2 is a schematic diagram showing a system architecture.
FIG. 3 is a flowchart of a method for providing a sensing service.
FIG. 4 is a schematic diagram showing a method for providing a sensing service.
FIG. 5 is a schematic diagram showing a method for providing a sensing service.
FIG. 6 is a flowchart of a method for providing a sensing service.
FIG. 7 is a flowchart of a method for providing a sensing service.
FIG. 8 is a flowchart of a method for providing a sensing service.
FIG. 9 is a flowchart of a method for providing a sensing service.
FIG. 10 is a flowchart of a method for providing a sensing service.
FIG. 11 is a schematic diagram of an apparatus for providing a sensing service.
FIG. 12 is a schematic diagram of an apparatus for providing a sensing service.
FIG. 13 is a schematic diagram of an apparatus for providing a sensing service.
FIG. 14 is a schematic diagram of an apparatus for providing a sensing service.
FIG. 15 is a schematic diagram of an apparatus for providing a sensing service.
FIG. 16 is a schematic diagram of an apparatus for providing a sensing service.
FIG. 17 is a flowchart of a method for providing a sensing service.
FIG. 18 is a schematic diagram of a UE.
FIG. 19 is a schematic diagram of a communication device.

### DETAILED DESCRIPTION

Reference will now be made in detail to the present invention, examples of which are illustrated in the accompanying drawings. The following description refers to the accompanying drawings in which the same numbers in different drawings represent the same or similar elements unless otherwise represented. The implementations set forth in the following description do not represent all implementations consistent with the present invention. They are merely examples of apparatuses and methods consistent with some aspects of the present invention as recited in the appended claims.

Terms used in the present invention are only for the purpose of describing specific embodiments, and shall not be construed to limit the present invention. As used in the present invention and the appended claims, "a/an" and "the" in a singular form are intended to include plural forms, unless clearly indicated in the context otherwise. It should be understood that, the term "and/or" used herein represents and contains any one of associated listed items and all possible combinations of more than one associated listed items.

It should be understood that terms such as "first," "second" and "third" may be used in the present invention for describing various information, these information should not be limited by these terms. These terms are only used for distinguishing information of the same type from others. For example, first information may also be referred to as second information, and similarly, the second information may also be referred to as the first information, without departing from the scope of the present invention. As used herein, the term "if" may be construed to mean "when" or "upon" or "in response to determining" depending on the context.

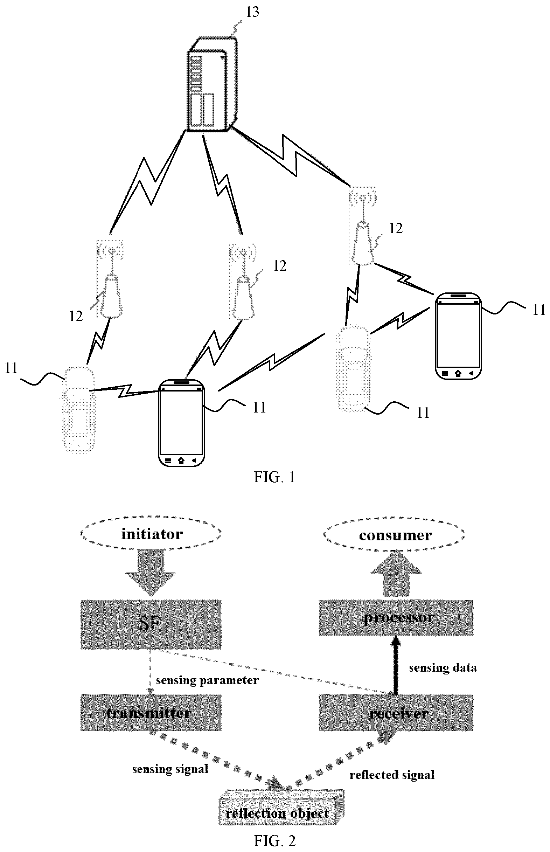

Referring to FIG. 1, a schematic diagram of a wireless communication system, as shown in FIG. 1, the wireless communication system is a communication system based on cellular mobile communication technology, and the wireless communication system may include several UEs 11 and several access devices 12.

A UE 11 may be a device that provides voice and/or data connectivity to a user. The UE 11 can communicate with one or more core networks via a radio access network (RAN), and the UE 11 may be an Internet of Things (IoT) UE, such as a sensor device, a mobile phone (or called a "cellular" phone) and a computer including an IoT UE. For example, the UE 11 may be a fixed device, a portable device, a pocket device, a hand-held device, a computer built-in device or a vehicle-mounted device. For example, the UE 11 may be a station (STA), a subscriber unit, a subscriber station, a mobile station, a mobile, a remote station, an access point, a remote UE, an access UE, a user terminal, a user agent, a user device, or a user equipment. Alternatively, the UE 11 may also be a device of an unmanned aerial vehicle. Alternatively, the UE 11 may also be a vehicle-mounted device, for example, it may be a trip computer with a wireless communication function, or a wireless communication device connected externally to the trip computer. Alternatively, the UE 11 may also be a roadside device, for example, it may be a street lamp, a signal lamp, or other roadside devices with a wireless communication function.

The access device 12 may be a network device in the wireless communication system. The wireless communication system may be the 4th generation (4G) mobile communication system, also known as a long term evolution (LTE) system, or the wireless communication system may be a 5G system, also called a new radio (NR) system or 5G NR system. Alternatively, the wireless communication system may be a next-generation system of the 5G system. An access network in the 5G system is called new generation-radio access network (NG-RAN). Alternatively, it may be a machine type communication (MTC) system.

The access device 12 may be an evolved node B (eNB) in a 4G system. Alternatively, the access device 12 may be a next-generation node B (gNB) adopting a centralized and distributed architecture in the 5G system. When the access device 12 adopts the centralized and distributed architecture, it generally includes a central unit (CU) and at least two distributed units (DU). The centralized unit is provided with a protocol stack of a packet data convergence protocol (PDCP) layer, a radio link control (RLC) layer, a media access control (MAC) layer. The distributed unit is provided with a physical (PHY) layer protocol stack. The specific implementation of the access device 12 is not limited in the present invention.

A wireless connection can be established between the access device 12 and the UE 11 through a wireless radio interface. In different cases, the wireless radio interface is a wireless radio interface based on the fourth generation (4G) mobile communication network technology standard; or the wireless radio interface is a wireless radio interface based on the fifth generation (5G) mobile communication network technology standard, such as a new radio interface; or the wireless radio interface is a wireless radio interface based on a next-generation (from 5G) mobile communication network technology standard.

An end-to-end (E2E) connection is established between the UEs 11, for example, vehicle to everything (V2X) communication, such as vehicle to vehicle (V2V) communication, vehicle to infrastructure (V2I) communication and vehicle to pedestrian (V2P) communication.

The above wireless communication system may further include a network management device 13.

Several access devices 12 are respectively connected to the network management device 13. The network management device 13 may be a core network device in the wireless communication system, for example, the network management device 13 may be a mobility management entity (MME) in an evolved packet core (EPC) network. Alternatively, the network management device may be other core network devices, such as a serving gateway (SGW), a public data network gateway (PGW), a policy and charging rule function (PCRF) unit or a home subscriber server (HSS), etc. The implementation form of the network management device 13 is not limited in the present invention.

The wireless sensing method provided by the present invention may be applied to a system architecture shown in FIG. 2, but is not limited to the system architecture shown in FIG. 2, the system includes the following members.

Initiator, which triggers the sensing service according to an application requirement, and may be outside the communication system corresponding to 3GPP;

Consumer, which receives and consumes output data from the sensing service, where the data may include sensing data and/or a sensing result generated based on the sensing data;

Sensing function (SF), a kind of network function, which may be any functional entity on the network side, and according to information/requirements provided by the initiator, determines a sensing model, and determines parameters of a transmitter (also called an emitter or a transmitting machine) and a receiver (also called an acceptor or a receiving machine), where the sensing parameters may at least be needed to coordinate receiving/transmitting parameters of sensing signals between the transmitter and the receiver;

Transmitter, transmits the sensing signal according to the sensing parameter received from the SF;

Receiver, receives a reflected signal according to the sensing parameter received from the SF, and sends the sensing data, if any, to a processor;

Processor, processes the sensing data received from the receiver and outputs the sensing result. It should be noted that the processor here may include one or more processors, or one or more processing devices.

It should be noted that a device may play one or more roles of the initiator, the consumer, the transmitter, the receiver, and the processor.

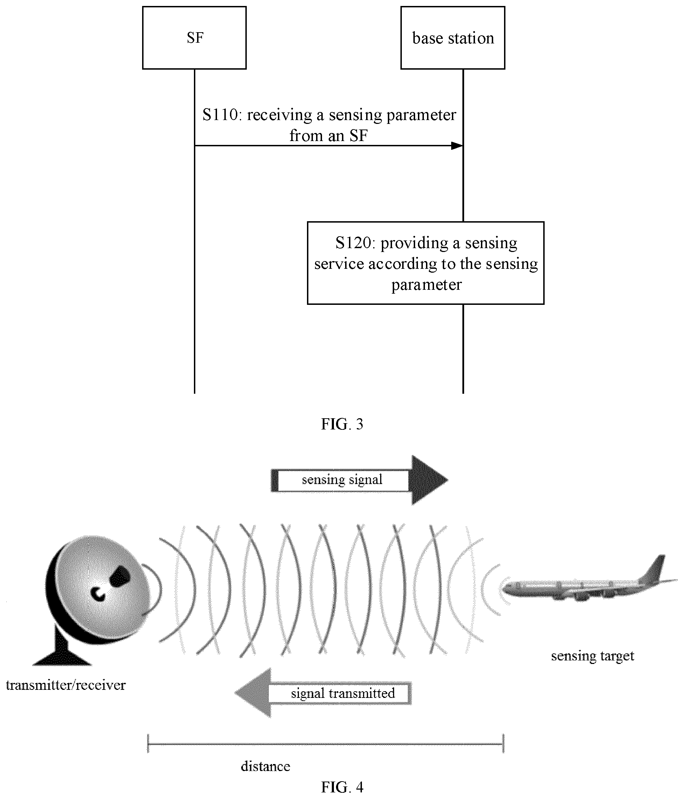

As shown in FIG. 3, the present invention provides a method for providing a sensing service, which is performed by a base station, and the method includes: in block S110, receiving a sensing parameter from an SF; in block S 120, providing a sensing service according to the sensing parameter.

If the base station is at least one of the transmitter, the receiver and the processor for the sensing function, the base station will receive the sensing parameter from the SF, and the base station will provide the sensing service according to the sensing parameter.

Sensing signal is a radio signal. For example, the radio signal includes, but is not limited to, a radar signal, a laser signal, or an ultrasonic signal, or other types of electromagnetic wave signals. Other electromagnetic wave signals include, but are not limited to, ultra wide band (UWB) signals, or electromagnetic waves for distance measurement based on time-of-flight.

FIG. 4 shows the wireless sensing based on radar waves.

The transmitter transmits a radar signal, and the radar signal will be reflected or absorbed when it encounters an obstacle during transmission. The reflected radar wave will be received by the receiver. Based on the received radar wave, the receiver may realize functions such as radar ranging and radar detection, to know parameters such as location, volume and/or shape of the obstacle.

As shown in FIG. 4, according to transmitting and receiving time of the radar wave, information such as a distance between a sensing target and a device where the transmitter or receiver is located, and a direction relative to the device where the transmitter or receiver is located may be determined.

For example, the specific use of the sensing service in the present invention includes, but is not limited to, at least one of the following: aircraft detection; obstacle detection; missile launch; spaceship navigation; maritime navigation; autopilot; weather detection; and terrain detection.

In the present invention, the UE firstly sends a sensing request to an access and mobility management function (AMF). In this way, the AMF, as a function for UE access and mobility management, may select an appropriate SF to provide the sensing parameter for the UE as required.

The sensing request may be any request to provide a sensing parameter and/or a sensing service. The sensing request may be a non-access stratum (NAS) message and/or an access stratum (AS) message.

The SF may be any functional entity on the network side, specifically, the SF may serve as one of network elements of a core network and/or an access network.

For example, the sensing function includes, but is not limited to, at least one of the following: an access function (AF); a policy control function (PCF); an access and mobility management function (AMF) or other network functions (NF).

The above functions are only examples, and the specific implementation is not limited thereto. The SF may be other network elements independent of the AF, the AMF or the PCF.

The sensing parameter may be any parameter required by an executor who provides the sensing service. Specifically, the sensing parameter includes at least one of the following: a transmitting parameter configured for the transmitter to send the sensing signal; a receiving parameter configured for the receiver to receive the sensing signal; a processing parameter configured for the processor to process sensing data corresponding to the sensing signal.

For example, the sensing parameter may further include at least one of the following: a sensing duration, a sensing area, and an accuracy requirement of a sensing result for providing the sensing service.

The transmitting parameter includes, but is not limited to, a transmitting power of the sensing signal, and a transmitting frequency of the sensing signal.

The receiving parameter includes, but is not limited to, a frequency of a receiving carrier of the sensing signal, and a receiving duration.

The processing parameter includes, but is not limited to, an upload parameter of the sensing data and/or identification information of a processing manner for processing the sensing data.

There may be a plurality of sensing models for providing the sensing service, some optional sensing models are provided below.

For example, the sensing model includes at least one of the following: a first sensing model where the base station is used as the transmitter and the receiver; a second sensing model where a user equipment (UE) is used as the transmitter and the receiver; a third sensing model where the base station is used as the transmitter and a UE is used as the receiver; a fourth sensing model where the UE is used as the transmitter and the base station is used as the receiver; a fifth sensing model different from the first to fourth sensing models.

If the base station acts as the transmitter and receiver, it means that the sensing service is completely performed by the network elements of the mobile communication network system.

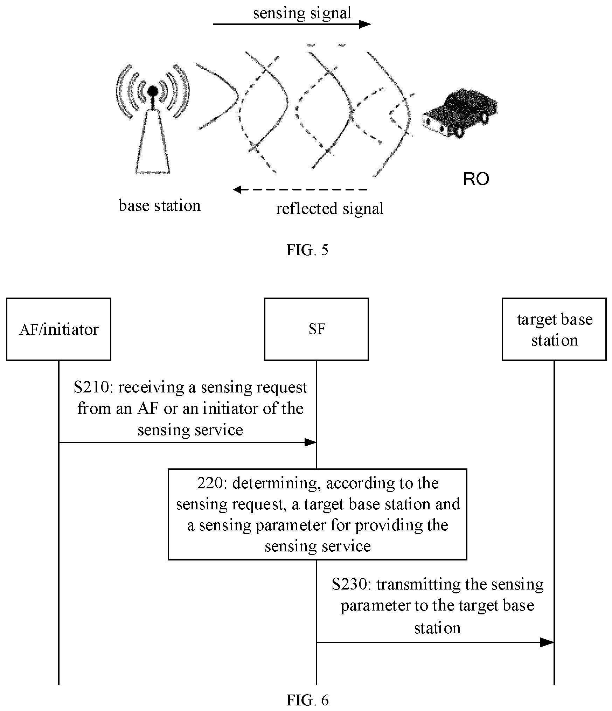

As shown in FIG. 5, the base station serves as a transmitter to send a sensing signal, and the sensing signal generates a reflected signal after reaching a reflection object (RO), and the base station receives the reflected signal. The reflection object here is the aforementioned sensing target. In FIG. 5, a solid line with an arrow indicates a transmitting direction of the sensing signal; a dotted line with an arrow indicates a transmitting direction of the reflected signal.

In the first sensing model, a processor may be involved, and the processor may be a base station or a computing device near the base station or the UE. The computing device includes, but is not limited to, an edge computing device or a remotely connected computing device.

In the second sensing model where UE is the transmitter and the receiver, at least the transmission and reception of the sensing signals are performed by one or more UEs. In this case of the second sensing model, the UE serving as the transmitter and the UE serving as the receiver may be the same UE or different UEs. In the present invention, the UE sending the sensing request may be at least one of the transmitter and the receiver. For example, the UE may act as both the transmitter and the receiver.

In the second sensing model, a processor may be involved, which may be a UE or a base station or a computing device connected to a base station. The computing device includes, but is not limited to, an edge computing device or a remotely connected computing device.

A third sensing model involves the base station and the UE where the base station serves as the transmitter and the UE serves as the receiver. In this case, the base station, as the transmitter, may transmit sensing signals to multiple UEs, thereby realizing provision of one-to-many sensing service, and providing the sensing service to different UEs.

In the third sensing model, a processor may be involved, which may be a UE or a base station or a computing device connected to a base station. The computing device includes, but is not limited to, an edge computing device or a remotely connected computing device.

The fourth sensing model involves the base station and the UE where the base station serves as the receiver and UE serves as the transmitter. In this case, the base station, as the receiver, may receive the sensing signals transmitted by multiple UEs at one time due to its strong receiving capability, thereby realizing provision of one-to-many sensing service, and providing the sensing service to different UEs.

In the fourth sensing model, a processor may be involved, which may be a UE or a base station or a computing device connected to a base station. The computing device includes, but is not limited to, an edge computing device or a remotely connected computing device.

The fifth sensing model may be any sensing model other than the aforementioned first to fourth sensing models.

For example, the fifth sensing model may include a sensing model involving multiple transmitters and/or multiple receivers, and types of multiple transmitters may be different. For example, the transmitters include both the UE and the base station, and/or, the receivers include both the UE and the base station. The devices serving as the transmitter and the receiver include, but are not limited to, the base station and/or the UE. In a specific implementation, the transmitter and/or the receiver may be a roadside device capable of establishing a connection with the base station or the UE, for example, may be a roadside monitoring device capable of transmitting and receiving wireless signals. The monitoring device includes, but is not limited to, a visual monitoring device based on image acquisition.

In the present invention, the base station may serve as the transmitter and the receiver at the same time. The base station transmits the sensing signal based on the transmitting parameter included in the sensing parameter, and receives, based on the receiving parameter, reflected signal generated by the sensing signal being reflected on the reflection object (RO).

As shown in FIG. 5, the base station is used as both the transmitter and the receiver. It transmits a sensing signal, the sensing signal encounters an obstacle (i.e., the RO) during transmission, and is reflected and returns to the base station. After the base station receives the reflected signal, it will record a receiving time, receiving power and/or receiving direction of the reflected signal, and use them in combination with transmitting time, transmitting power and/or transmitting direction of the transmitted sensing signal to determine a distance from the reflection object and/or a direction of the reflection object. Combined with the known geographic location of the base station, the precise location of the RO may be determined.

The step in block S 120 may include: transmitting a sensing signal according to a transmitting parameter included in the sensing parameter; and/or obtaining sensing data by receiving, according to a receiving parameter included in the sensing parameter, a signal reflected from a sensing target sensed by the sensing signal; and/or obtaining a sensing result by processing the sensing data according to a processing parameter included in the sensing parameter

A carrier frequency of the sensing signal transmitted by the base station may be different from a carrier frequency of a radio frequency signal used by the base station for wireless communication with the UE, so that mutual interference between the wireless communication and the sensing service provided by the base station may be avoided, thus ensuring the quality of the wireless communication and the quality of the sensing service.

The carrier frequency at which the base station transmits the sensing signal may be the same as the carrier frequency at which the base station performs the wireless communication. For example, in the wireless communication, an idle carrier frequency may be used for communication, so that effective utilization of the frequency resource is improved and a wireless transmitting module does not need to support transmission and reception of different carrier frequencies of the wireless communication and sensing signals.

The base station transmitting the sensing signal and the base station receiving the sensing signal may be different. In this way, when the sensing model providing the sensing service is the first sensing model, one base station is used as both the transmitter and the receiver, or one base station is used as the transmitter and another base station is used as the receiver.

The sensing data may be original sensing data generated by receiving the reflected signal, and the sensing result may include sensing data formed after processing the original sensing data, i.e., processed sensing data. That is, the processed sensing data is the sensing result. For example, the sensing data is sampled, and the sampled sensing data is one kind of the sensing results. For another example, according to the processing parameter contained in the sensing transmission, some preliminary processing is performed on the sensing data to obtain the sensing result. For example, the processing parameter may include an operation of removing abnormal data and/or calculation of the sensing result such as a preliminary distance and/or direction.

The sensing result includes: an intermediate result of the sensing data, and/or a final processing result of the sensing data.

For example, processing the sensing data to obtain the sensing result may include: performing preliminary processing on the sensing data to obtain the intermediate result; and/or, processing the sensing data to obtain the final result.

The final result indicates a distance, a direction and/or a contour of the sensing target.

The intermediate result does not include the final result indicating the distance, the direction and/or the contour of the sensing target, but includes a non-final result obtained by the preliminary processing, where the non-final result is the intermediate result.

The preliminary processing may include: valid data selection, abnormal data elimination, or preliminary calculation for final result calculation. For example, invalid data is eliminated, and sensing data participating in the final result calculation is selected as the result of the preliminary processing, and this result is sent to the target SF, AF, initiator and/or consumer.

The method further includes: establishing a transmission link with an application function (AF) or an initiator of the sensing service, where the transmission link is configured to transmit the sensing data and/or the sensing result.

For example, the transmission link may be established before transmitting the sensing signal according to the transmitting parameter and/or receiving the sensing signal according to the receiving parameter. For another example, the transmission link may be established at the same time when the base station sends the sensing signal according to the transmitting parameter and/or receives the sensing signal according to received signal, or the transmission link may be established before the AF or the initiator sends the sensing data and/or the sensing result.

The sensing parameter includes address information of the transmission link established between the base station and the AF/initiator. The address information includes, but is not limited to, internet protocol (IP) address information and/or media access control (MAC) address information.

The method further includes: establishing a transmission link with an application function (AF) or an initiator of the sensing service. The transmission link is configured to transmit the sensing data and/or the sensing result.

The base station may not establish a transmission link with the AF and/or the initiator, the base station will send the sensing data and/or the sensing result to the SF, and the SF will send the sensing data and /or the sensing result to the AF and/or the initiator of the sensing service.

Therefore, the method further includes: transmitting the sensing data to the SF. The sensing data is used for the SF to determine the sensing result, or the SF is configured to transmit the sensing data to the AF or the initiator of the sensing service.

The sensing parameter further include: target information of the sensing target, so that the base station may better transmit the sensing signal and/or receive the reflected signal according to the target information of the sensing target.

For example, the sensing parameter received by the base station from the SF may include information such as the target information of the sensing target and the transmitting time of the sensing signal. At this time, the base station may determine a coverage range and/or a transmitting power of the sensing signal according to the target information of the sensing target.

For example, the target information indicates at least one of the following: an area where the sensing target is located; a type of the sensing target; a movement speed of the sensing target; and a volume of the sensing target.

Sensing targets with different areas and/or volumes may be used to determine parameters such as an angle and/or a power of the transmitter for transmitting the sensing signal.

The area information of the sensing target may indicate the area where the sensing target is currently located, which may conveniently determine the sensing service area.

The location of the sensing target may be used to determine an executor, for example, to select a suitable executor nearby to perform the sensing service.

The speed of the sensing target may have an impact on the successful provision of the sensing service. For example, a high-speed moving object has a requirement on the transmitting power of the transmitter in the sensing service. In addition, Doppler effect may be generated due to the movement of the sensing target, providing requirements on the processing capability of the processor for providing the sensing service.

The target information of the sensing target is not limited to the aforementioned area, location, volume and/or speed, and the type of the sensing target may also be used. For example, the target may be determined as a static sensing target or a dynamic sensing target based on whether the sensing target is moving or not. The target may be determined as a living target or a non-living target based on whether the sensing target is living or not. If the target is a living target, the impact (for example a negative impact) of the radar spot on the living body should be considered.

In the present invention, the base station participates in providing the sensing service, so as to enhance the provision of the sensing service, thereby ensuring the service quality of the sensing service.

As shown in FIG. 6, the present invention provide a method for providing a sensing service, performed by the SF, including: in block S210, receiving a sensing request from an AF or an initiator of the sensing service; in block S220, determining, according to the sensing request, a target base station and a sensing parameter for providing the sensing service; and in block S230, transmitting the sensing parameter to the target base station.

The AF may be a server or a network element of an application program of the sensing service. The initiator may be a client with a corresponding application installed.

In the present invention, the sensing request may be sent by the AF or the initiator of the sensing service. The SF may receive the sensing request from the AF or the initiator.

After receiving the sensing request, the SF will determine the target base station configured for providing the sensing service, and the sensing parameter.

For example, after receiving the sensing request, candidate base stations capable of providing the sensing service may be determined, and the target base station may be selected from the candidate base stations. For example, according to a load rate of the candidate base stations, a candidate base station with a low load rate is selected as the target base station. In another example, a base station of the sensing service capable of providing a QoS required by QoS information is determined as the target base station according to the QoS information carried in the sensing request. Specific implementation is not limited to the above examples of the SF determining the target base station.

In addition, the SF will further determine the sensing parameter according to the sensing request, and the sensing parameter may include: at least one of the transmitting parameter, the receiving parameter and the processing parameter. After the sensing parameter is determined, the sensing parameter will be sent to the target base station for the target base station to provide the sensing service based on the sensing parameter.

The sensing request at least includes: identification information of the initiator of the sensing service. The method further includes: performing a verification according to the identification information of the initiator. After the initiator is verified, the target base station of the sensing service and/or a sensing parameter query are determined

The verification here may include, but not limited to, privilege verification and/or privacy security verification.

For example, the initiator has a privilege to obtain the sensing service only after subscribing (contracting with) a sensing application that provides the sensing service. Therefore, the privilege verification may be performed on the initiator according to whether the initiator subscribes to subscription data (contract data) of the sensing service.

For another example, the initiator has subscribed to the sensor service, but the initiator requests a sensor service with a higher level verification, the initiator still cannot pass the verification.

The privacy security verification is used to determine whether privacy data that users do not want to be exposed will be exposed during the provision of the sensing service. For example, some users do not want to reveal their current locations. If the initiator requests to locate such a user, it will violate the privacy of the corresponding user. In this way, the privacy of the user is protected by the privacy security verification.

There are many ways to verify the initiator. Specifically, for example, the SF may complete the verification locally, or complete the verification through the interaction between the SF and other network elements.

Performing the verification according to the identification information of the initiator includes: transmitting a query request to a user data management (UDM) according to the sensing request, where the query request at least includes: identification information of the initiator of the sensing service; and receiving a query result returned by the UDM.

For example, the SF sends the query request to the UDM according to the sensing service. The query request may query the UDM for the subscription data of the initiator, or request the UDM to verify the initiator according to the subscription data, and return a verification result in the query result.

The UDM stores the user's subscription data which may be used for the privilege verification and/or the privacy security verification.

The sensing request further includes: sensing model information for indicating a sensing model expected to be used in response to the sensing request. The query request further includes: the sensing model information. The query result is returned according to the identification information of the initiator and the sensing model information.

The sensing model information indicates the sensing model used by the sensing service acquired by the initiator. In this way, after the UDM receives the query request, it may further determine, according to the sensing model information, whether the initiator has subscribed to the sensing application with the sensing service provided by the sensing model that the initiator expects to use. If not, the privilege verification may be different, or using the sensing model may cause privacy exposure of one or more users, and the privacy security verification may be different. In view of this, the query result is returned according to the identification information of the initiator and the sensing model information.

Content carried by the query result may include the subscription data of the sensing service used to verify the privilege/authority of the initiator, or the query result may be a verification result obtained by the UDM directly querying/searching for the subscription data located in the UDM based on the query request and determining whether a given verification is successful.

The verification result may include: a verification result indicating that the verification is successful and/or a verification result indicating that the verification fails.

The sensing model includes at least one of the followings: a first sensing model where the base station is used as a transmitter and a receiver; a second sensing model where a user equipment (UE) is used as a transmitter and a receiver; a third sensing model where the base station is used as a transmitter and a UE is used as a receiver; a fourth sensing model where the UE is used as a transmitter and the base station is used as a receiver; a fifth sensing model different from the first to fourth sensing models.

For descriptions of the first sensing model, the second sensing model, the third sensing model, the fourth sensing model and the fifth sensing model, reference may be made to the relevant descriptions in the aforementioned contents, which will not be repeated here.

The sensing request includes target information, the target information indicates an area of a sensing target. Determining, according to the sensing request, the target base station for providing the sensing service includes: transmitting a sensing service query to an access and mobility management function (AMF), where the sensing service query includes the target information; and receiving a sensing service response returned by the AMF, where the sensing service response includes: an identification of the target base station, and the target base station is a base station within the area of the sensing target and capable of providing the sensing service.

The AMF is a common network element that may be used for access and mobility management for the UE, and thus the target base station may be determined by the AMF.

For example, the AMF may select an appropriate target base station for providing the sensing service according to a location of the UE and/or the sensing target involved in the sensing service.

For example, the target base station may be at least one of the followings: a candidate base station closest to the sensing target and capable of providing the sensing service; a candidate base station located in the same sensing area as the sensing target; a candidate base station closest to the UE involved in the sensing service; a candidate base station located in the same sensing area as the UE involved in the sensing service.

The present invention is not limited to the above-mentioned examples when the AMF determines the target base station based on the sensing request.

In the present invention, after receiving the sensing request, the SF requests the AMF to determine the target base station, and ensures that the selected target base station is a suitable base station for providing the sensing service.

The sensing request further includes: quality of service (QoS) information indicating a QoS of the sensing service, the sensing service query further includes the QoS information; and the target base station is a base station within the area of the sensing target and capable of providing the sensing service of the QoS information

For the QoS indicated by the QoS information, different QoS values indicate different resources allocated when the sensing service is provided and/or different manners for providing the sensing service.

Therefore, some base stations may provide the sensing service, but may not be able to provide the QoS sensing service required by the initiator, or the base station may provide multi-QoS sensing service.

In the present invention, the target base station is selected from base stations in the area of the sensing target, so that the sensing target is in coverage range of a sensing signal transmitted by the target base station and the target base station may provide the sensing service of the QoS information required by the initiator, thus ensuring the QoS of the sensing service.

In the present invention, determining, according to the sensing request, the sensing parameter for providing the sensing service includes: determining the sensing parameter according to at least one of the sensing request and a policy parameter.

The sensing parameter is determined according to candidate parameters provided by the sensing request. For example, at least one of the candidate parameters is determined as the sensing parameter. For another example, according to identification information of candidate models and device information of candidate devices carried in the sensing request, the executor who provides the sensing service and the sensing model that provides the sensing service are determined.

Determining the sensing parameter according to the policy parameter may include: according to one or more sets of candidate parameters provided by the policy parameter, randomly determining a set of candidate parameters or selecting, in a predefined manner, a set of candidate parameters as the sensing parameter; and/or according to a range of the sensing parameter defined by the policy parameter, selecting a set of parameters from the range as the sensing parameter.

Determining the sensing parameter according to the sensing request and the policy parameter may include at least one of the followings: determining whether candidate parameters provided by the sensing request are included in the policy parameter; if yes, determining the candidate parameters as the sensing parameter; and/or, if no, randomly selecting a set of parameters from the policy parameter as the sensing parameter, or selecting a set of policy parameters closest to the candidate parameters as the sensing parameter.

Specific implementation is not limited to the above examples of determining the sensing parameter according to at least one of the sensing request and the policy parameter.

The policy parameter include: a local policy parameter of the SF; and a policy parameter provided by a policy control function (PCF).

The policy parameter here may be stored locally by the SF or may be requested from the PCF.

The local policy parameter of the SF may be pre-configured in the SF, or may be stored in the local SF after the last request from the PCF.

If the policy parameter is not stored in the SF, it may be requested from the PCF. In another example, when a priority of the policy parameter stored locally in the SF is low, a policy parameter with a higher priority may be requested from the PCF.

Specific implementation is not limited to the above examples of the source and/or acquisition manner of the policy parameter.

The determining the sensing parameter according to at least one of the sensing request and the policy parameter includes: transmitting a policy request to a PCF according to the sensing request; receiving a policy response returned by the PCF, where the policy response includes the policy parameter provided by the PCF; and determining the sensing parameter according to the policy response.

A way to request the policy parameter from the PCF may be sending a policy request to the PCF.

The policy request may request the PCF to return one or more policies for determining the parameter, and the one or more policies may be carried in the policy response. The SF may, according to the one or more policies carried in the policy response, determine the sensing parameter. The policy parameter is a way of indicating a policy.

In the present invention, the policy parameter may be one or more sets of candidate parameters, and one set is selected as the sensing parameter according to the one or more sets of candidate parameters in the response policy.

In the present invention, the policy parameter may be a parameter range that defines the sensing parameter, and the SF may determine the sensing parameter independently according to the parameter range, or determine the sensing parameter according to the parameter range and the sensing request.

The sensing request includes: identification information of the initiator. The policy request includes the identification information of the initiator, and the policy response is returned according to the identification information of the initiator.

The identification information of the initiator may be identification information that may uniquely determine the initiator, such as device identification information, sensing service identification information, or application program identification information.

The policy request includes the identification information of the initiator, which is used by the PCF to determine the to-be-returned policy response for the initiator, and thus the sensing service for the initiator is determined.

In the present invention, the method further includes: receiving sensing data from the target base station; obtaining a sensing result processed in a predetermined manner based on the sensing data; and transmitting the sensing result to the AF or the initiator of the sensing service.

In the present invention, the SF will receive the sensing data from the base station, and process the sensing data in a predetermined manner to obtain the sensing result.

The predetermined manner may be a manner specified in a standard protocol or a proprietary protocol, or a manner pre-negotiated between the SF and the base station, or a manner pre-negotiated between the SF and the initiator/AF. In a word, in the present invention, if the SF receives the sensing data from the target base station, it will process the sensing data in a predetermined manner to obtain the sensing result.

The sensing result include: an intermediate result and/or a final result.

The obtained sensing result is sent to the AF or the initiator of the sensing service subsequently. The sensing result may also be sent directly to the consumer. For example, the AF or the initiator of sensing service may also be the consumer of the sensing result, and thus the sensing result may be sent directly to the AF or the initiator of sensing service. For another example, the AF or the initiator may not be a final consumer. At this time, the SF may send the result to the AF or the initiator, and the AF or the initiator forwards it to the consumer. It is also possible for the SF to directly send the sensing result to the consumer.

In the present invention, the method further includes: receiving sensing data from the target base station, and transmitting the sensing data to the AF or the initiator of the sensing service.

The SF receives the sensing data sent by the base station and directly send the data to the AF or the initiator without any processing.

In the present invention, the method further includes: receiving a sensing result from the target base station, and transmitting the sensing result to the AF or the initiator.

In the present invention, the target base station may directly send the sensing data and/or the sensing result to the AF or the initiator or the consumer, and thus the SF may not receive the sensing data and/or the sensing result.

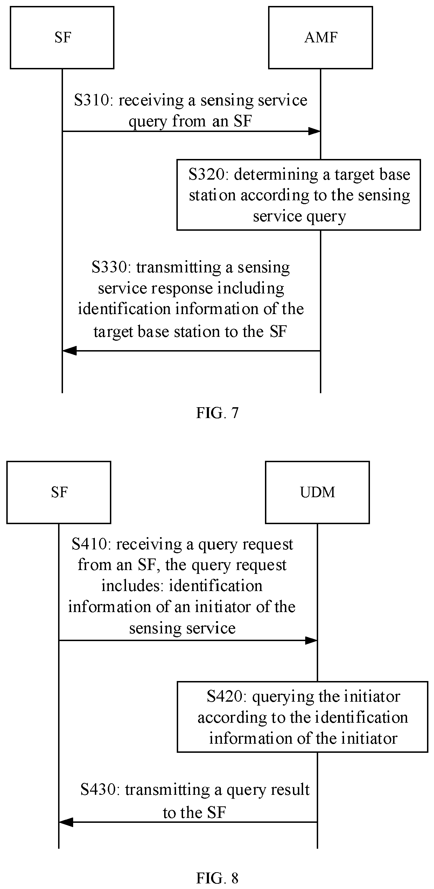

As shown in FIG. 7, the present invention provide a method for providing a sensing service, performed by the AMF, including: in block S310, receiving a sensing service query from an SF; in block S320, determining a target base station according to the sensing service query; and in block S330, transmitting a sensing service response including identification information of the target base station to the SF.

The AMF will receive the sensing service query sent by the SF, and the query is sent by the SF based on the received sensing request. In view of this, the AMF will determine, according to the query, the target base station that responds to the sensing request.

For example, the AMF selects a target base station providing the sensing service from one or more candidate base stations capable of providing the sensing service, and sends the identification information of the target base station carried in the sensing service response to the SF. The identification information is used for the SF to send the sensing parameter for providing the sensing service to the target base station.

The S320 may include: according to the target information of the sensing target carried in the sensing service query, selecting the target base station capable of providing the sensing service from base stations in an area indicated by the target information.

The target information may indicate the area where the sensing target is located, specifically, the target information may indicate a sensing area where the sensing target is located.

In the present invention, the AMF selects a nearby candidate base station capable of providing the sensing service as the target base station.

The sensing service query further includes: indicating QoS information, and the S320 may include: selecting the target base station according to the target information of the sensing target carried in the sensing service query, where the target base station is a base station capable of providing the sensing service of the QoS information.

In the present invention, when the AMF selects the target base station, it will not only consider the area where the sensing target is located, but also consider the QoS information of the sensing service of the target bases station, so that the selected target base station can provide the sensing service with the QoS requested by the sensing request.

As shown in FIG. 8, the present invention provide a method for providing a sensing service, performed by the UDM, including: in block S410, receiving a query request from a sensing function (SF), where the query request includes: identification information of an initiator of the sensing service; in block S420, querying the initiator according to the identification information of the initiator; and in block S430, transmitting a query result to the SF.

The UDM stores user data, and the user data may include: user subscription data.

After receiving the sensing request, the SF sends a query request to the UDM to verify the imitator.

After receiving the query request, the UDM will query the user data to obtain the subscription data of the initiator and/or provide a query on the user involved in the sensing service corresponding to the sensing request, to obtain the query result.

The identification information includes, but is not limited to, identification information that uniquely determine the initiator of the sensing service, such as a device identification, a service identification, and/or an application identification.

The query result may include: the verification result and/or the subscription data that is used to verify the initiator.

The verification result may directly indicate that the initiator passed the verification or different verifications.

The subscription data is carried in the query result and returned to the SF, and may be used by the SF to determine whether the initiator has passed the verification based on the returned subscription data.

The verification here includes, but is not limited to, privilege verification and/or privacy security verification. Descriptions of the privilege verification and the privacy security verification have been described in the foregoing contents, and will not be repeated here.

In the present invention, the step in block S430 may include: querying a user database according to the identification information of the initiator and the sensing model information; and transmitting the query result that the imitator is verified to the SF when it is determined according to the query result that the initiator subscribed to the sensing service provided by the sensing model indicated by the sensing model information, send the verified query result to the SF; or transmitting the query result that the imitator is not verified to the SF according to the result of the query, when it is determined according to the query result that the initiator does not subscribe to the sensing model indicated by the sensing model information to provide the sensing service or the initiator does not subscribe to the sensing service.

In the present invention, the sensing request of the initiator will carry the sensing model information to indicate the sensing model used for the sensing service expected to be obtained.

The UDM may determine whether the initiator has access to the sensing service provided by the sensing model as required by the initiator according to the subscription data and the sensing model information.

The query request further includes QoS information, and the step in block S430 includes: transmitting the query result to the SF according to the identification information of the initiator and the QoS information.

The UDM will check the subscription data of the initiator according to the identification information of the initiator, and determine whether the initiator has subscribed to the QoS sensing service according to the subscription data. If the initiator has subscribed to the sensing service of the QoS information, it is determined that the initiator has passed the verification, otherwise, it is determined that the initiator does not pass the verification. Information of whether the initiator has passed the verification may be returned to the SF via the query result, or the queried subscription data may be carried in the query result and returned to the SF.

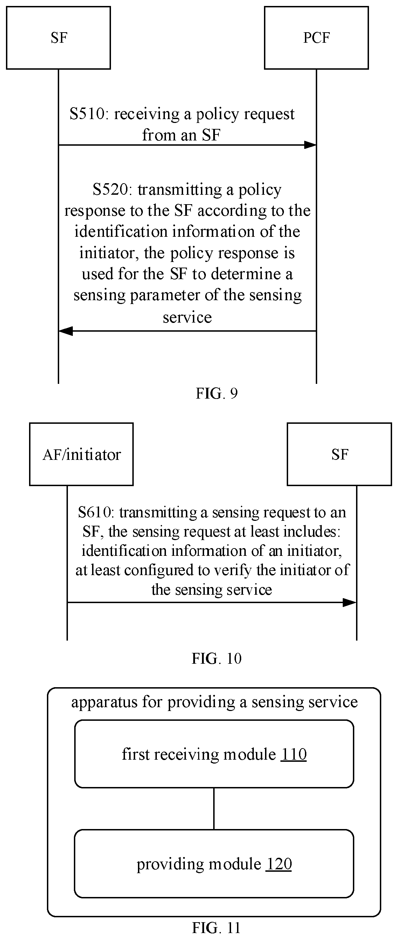

As shown in FIG. 9, the present invention provide a method for providing a sensing service, performed by the PCF, including: in block S510, receiving a policy request from a sensing function (SF), where the policy request includes identification information of an initiator of the sensing service; and in block S520, transmitting a policy response to the SF according to the identification information of the initiator, where the policy response is used for the SF to determine a sensing parameter of the sensing service.

The PCF stores policy information. After receiving the sensing request, the SF may request the policy parameter from the PCF when determining the sensing parameter, so as to determine the appropriate sensing parameter for providing the sensing service.

The policy response includes: a policy parameter; and the policy parameter is used for the SF to determine the sensing parameter.

In the present invention, the policy parameter may include one or more sets of candidate parameters for providing the sensing service.

In the present invention, the policy parameter may further indicate a parameter range value, and after receiving the parameter range value, the SF will determine the sensing parameter from the parameter range value.

As shown in FIG. 10, the present invention provide a method for providing a sensing service, performed by the application function (AF) or the initiator of the sensing service, including: in block S610, transmitting a sensing request to a sensing function (SF), where the sensing request at least includes: identification information of an initiator, at least configured to verify the initiator of the sensing service, and the sensing request is used to request the SF to select a target base station for providing the sensing service.

In the present invention, the AF or the initiator transmits the sensing request to the SF, and the sensing request at least includes the identification information of the initiator, which is used to verify the initiator.

The verification may be of various types, including, but not limited to, privilege verification and/or privacy security verification.

The sensing request further includes at least one of the followings: address information of the AF or the initiator, where the address information is used for the target base station to establish a sensing data transmission link with the AF or the initiator; target information of a sensing target; QoS information, at least used to indicate a QoS of the sensing service; sensing model information, indicating a sensing model expected to be used by the AF or the initiator.

The target information of the sensing target indicates, but not limited to, at least one of the followings: location, size and/or speed of the sensing target.

For example, the target information indicates at least one of the followings: an area where the sensing target is located; a type of the sensing target; a movement speed of the sensing target; and a volume of the sensing target.

For example, the sensing model includes at least one of the followings: a first sensing model where the base station is used as a transmitter and a receiver; a second sensing model where a user equipment (UE) is used as a transmitter and a receiver; a third sensing model where the base station is used as a transmitter and a UE is used as a receiver; a fourth sensing model where the UE is used as a transmitter and the base station is used as a receiver; a fifth sensing model different from the first to fourth sensing models.

The QoS information indicates information related to quality of service, such as the QoS level.

Transmitting the sensing request to the SF includes: transmitting the sensing request to the SF via a network exposure function (NEF).

If the AF or initiator is deployed by the communication operator or authorized by the communication operator to be deployed, the AF or initiator may be deployed in a trusted environment where network elements such as the SF, the AMF, the UDM, and/or the PCF are located. In this case, the AF or initiator may directly send the sensing request to the SF.

If the AF or initiator is not deployed by the communication operator or is not authorized by the communication operator to be deployed, the AF or initiator may be outside the trusted environment where the network elements such as the SF, the AMF, the UDM, and/or the PCF are located. In this case, to ensure communication security, the AF or the initiator needs to transmit the sensing request to the SF via the NEF that isolates the trusted environment from an untrusted environment.

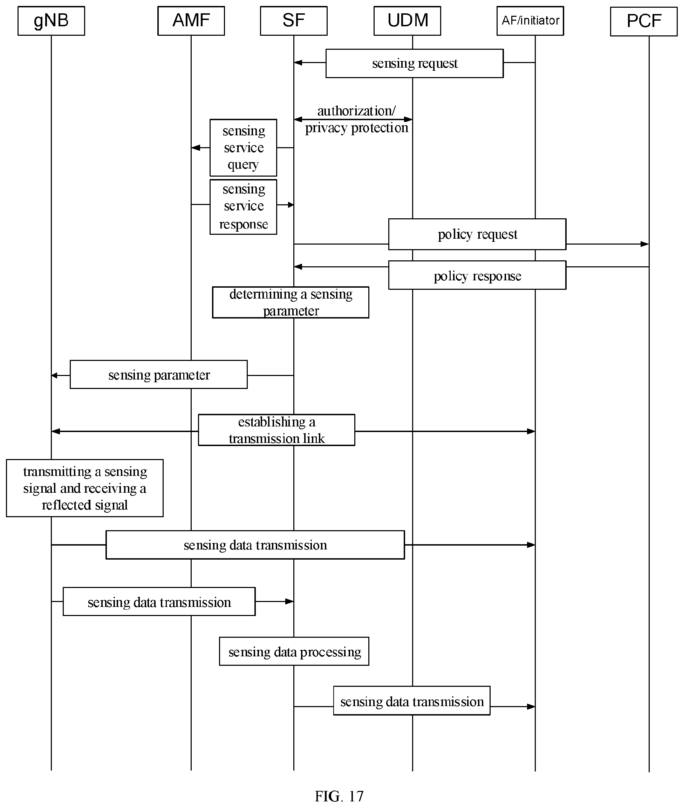

Referring to FIG. 17, the present invention provide enhancement to support the sensing service (also called a detecting service) through the base station, that is, through specific physical enhancements and corresponding parameter configurations, the base station is able to transmit the sensing signal, receive the sensing data, process it or send it directly to a data receiving terminal of an application layer. The data receiving terminal may be the AF or an application server or the like.

In this system, STx/SRx gNB refers to the base station which can be used as the transmitter of the sensing signal and the receiver of the reflected signal at the same time, and RO represents the sensing target. STx gNB indicates a base station transmitting the sensing signal, and SRx gNB indicates a base station receiving the sensing signal.

The method for providing the sensing service in this functional case may include the following steps.

AF/Initiator sends a sensing request to an SF directly or via an NEF. The sensing request may include at least one of the followings: ID of the initiator; sensing model information; target information of a sensing target, where the target information includes, but is not limited to, target location, target size and/or target speed; QoS information, indicating a QoS requirement for providing the sensing service; sensing period information, indicating a sensing period; sensing area information, indicating a sensing area; and address information of the AF, the initiator or the target server.

The sensing function (SF) sends a query request to the UDM to check whether the query request is allowed, and the query request may include at least one of the followings: identification information of the initiator; sensing model information; and sensing target information.

The SF selects the AMF according to the target information and/or pre-configuration, and sends a sensing service query to the AMF to check whether the requested sensing service is supported by the base station (e.g., gNB). A message includes: target information of a target object and/or QoS information.

The AMF sends a response message to the AF, where the response message at least includes identification information of the determined target base station providing the sensing service.

The SF selects the PCF and requests a relevant policy parameter from the PCF. The request message includes identification information of the initiator, so that after receiving the request, the PCF knows which initiator sends the request.

The PCF feeds back a policy response, which may include the policy parameter.

The SF determines a detailed parameter of STx and SRx according to feedback from the AMF/PCF and/or the local policy. The detailed parameter is the aforementioned sensing parameter finally determined for providing the sensing service.

The SF sends the sensing parameter to the target gNB. The sensing parameter may include: a transmitting parameter, a receiving parameter, an area information of a sensing target area, and/or address information of a device that needs to receive sensing data or a sensing result. The device for receiving the sensing data or the sensing result here includes, but is not limited to, the AF, the initiator and/or the target server.

The base station (e.g., SRx gNB) for transmitting the sensing signal establishes a transmission link for transmitting the sensing data or the sensing result to the target sensing server.

The gNB transmits the sensing signal and receives the reflected signal.

The gNB collects the sensing data and sends it to the SF for further processing, or the gNB collects the sensing data and sends it to the AF/initiator/target server.

The SF collects and processes the sensing data in a predetermined manner.

The SF sends the sensing data to the AF/initiator.

As shown in FIG. 11, the present invention provide an apparatus for providing a sensing service, including: a first receiving module 110 configured to receive a sensing parameter from a sensing function (SF); and a providing module 120 configured to provide the sensing service according to the sensing parameter.

The first receiving module 110 and the providing module 120 may be program modules. After the program module is executed by a processor, operations of receiving the sensing parameter and providing the sensing service may be implemented.

In the present invention, the first receiving module 110 and the providing module 120 may be a combination of hardware and software modules. The combination of hardware and software modules includes, but is not limited to, various programmable circuits. The programmable circuits include, but is not limited to, a field programmable circuit and/or a complex programmable circuit.

In the present invention, the first receiving module 110 and the providing module 120 may be pure hardware modules. The pure hardware module includes, but is not limited to, an application specific integrated circuit.

The providing module 120 is configured to transmit a sensing signal according to a transmitting parameter included in the sensing parameter; and/or obtain sensing data by receiving, according to a receiving parameter included in the sensing parameter, a signal reflected from a sensing target sensed by the sensing signal; and/or obtain a sensing result by processing the sensing data according to a processing parameter included in the sensing parameter.

The apparatus further includes: an establishing module configured to establish a transmission link with an application function (AF) or an initiator of the sensing service, where the transmission link is configured to transmit the sensing data and/or the sensing result.

The sensing parameter further includes: address information for indicating an address of the AF or the initiator of the sensing service, and at least configured for establishing the transmission link.

The apparatus further includes: a first transmitting module configured to transmit the sensing data to the SF, where the sensing data is used for the SF to determine the sensing result, or the SF is configured to transmit the sensing data to the AF or the initiator of the sensing service.

The sensing result includes an intermediate result of the sensing data, and/or a final processing result of the sensing data.

The sensing parameter further includes: target information of the sensing target.

The target information indicates at least one of the followings: an area where the sensing target is located; a type of the sensing target; a movement speed of the sensing target; and a volume of the sensing target.

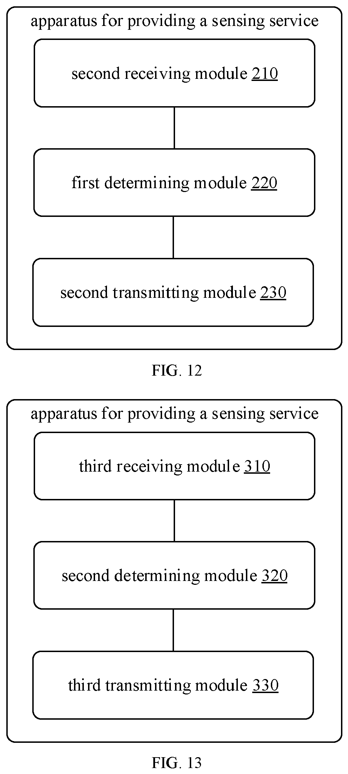

As shown in FIG. 12, the present invention provide an apparatus for providing a sensing service, performed by a sensing function (SF), including: a second receiving module 210 configured to receive a sensing request from an application function (AF) or an initiator of the sensing service; a first determining module 220 configured to determine, according to the sensing request, a target base station and a sensing parameter for providing the sensing service; and a second transmitting module 230 configured to transmit the sensing parameter to the target base station.

The second receiving module 210, the first determining module 220 and the second transmitting module 230 may be program modules, and after the program modules are executed by the processor, the functions of the above modules can be realized.

In the present invention, the second receiving module 210, the first determining module 220, and the second transmitting module 230 may be a combination of software and hardware modules. The combination of the software and hardware modules includes, but is not limited to, various programmable arrays. The programmable array includes, but is not limited to, a field programmable array and/or a complex programmable array.

In the present invention, the second receiving module 210, the first determining module 220 and the second transmitting module 230 may be pure hardware modules. The pure hardware module includes, but is not limited to, an application specific integrated circuit.

The sensing request at least includes: identification information of the initiator of the sensing service; and the apparatus further includes: a verification module configured to perform verification according to the identification information of the initiator, where after the initiator is verified, the target base station of the sensing service and/or the sensing parameter are determined.

The verification module configured to: transmit a query request to a user data management (UDM) according to the sensing request, where the query request at least includes: the identification information of the initiator of the sensing service; and receive a query result returned by the UDM.

The sensing request further includes sensing model information for indicating a sensing model expected to be used in response to the sensing request, the query request of the sensing service further includes the sensing model information, and the query result is returned according to the identification information of the initiator and the sensing model information.

The sensing model includes at least one of the followings: a first sensing model where the base station is used as a transmitter and a receiver; a second sensing model where a user equipment (UE) is used as a transmitter and a receiver; a third sensing model where the base station is used as a transmitter and a UE is used as a receiver; a fourth sensing model where the UE is used as a transmitter and the base station is used as a receiver; a fifth sensing model different from the first to fourth sensing models.

The sensing request includes target information, and the target information indicates an area of a sensing target. Determining, according to the sensing request, the target base station for providing the sensing service includes: transmitting a sensing service query to an access and mobility management function (AMF), where the sensing service query includes the target information; and receiving a sensing service response returned by the AMF, where the sensing service response includes: an identification of the target base station, where the target base station is a base station within the area of the sensing target and capable of providing the sensing service.

The sensing request further includes quality of service (QoS) information for indicating a QoS of the sensing service; the sensing service query further includes the QoS information; and the target base station is a base station within the area of the sensing target and capable of providing the sensing service of the QoS information.

In the present invention, determining, according to the sensing request, the sensing parameter for providing the sensing service includes: determining the sensing parameter according to at least one of the sensing request and a policy parameter.

The policy parameter includes: a local policy parameter of the SF; and a policy parameter provided by a policy control function (PCF).

The first determining module configured to: transmit a policy request to a PCF according to the sensing request; receive a policy response returned by the PCF, where the policy response includes the policy parameter provided by the PCF; and determine the sensing parameter according to the policy response.

The sensing request includes: identification information of the initiator; the policy request includes the identification information of the initiator; the policy response is returned according to the identification information of the initiator.

The second receiving module 210 is further configured to receive sensing data from the target base station. The apparatus further includes: a processing module configured to obtain a sensing result processed in a predetermined manner based on the sensing data. The second transmitting is configured to transmit the sensing result to the AF or the initiator of the sensing service.

The second receiving module 210 is further configured to receive sensing data from the target base station, and the second transmitting module 230 is further configured to transmit the sensing data to the AF or the initiator of the sensing service; or the second receiving module 210 is further configured to receive a sensing result from the target base station, and the second transmitting module 230 is further configured to transmit the sensing result to the AF or the initiator.

As shown in FIG. 13, the present invention provide an apparatus for providing a sensing service, performed by an AMF, including: a third receiving module 310 configured to receive a sensing service query from a sensing function (SF); a second determining module 320 configured to determine a target base station according to the sensing service query; and a third transmitting module 330 configured to transmit a sensing service response including identification information of the target base station to the SF.

The third receiving module 310, the second determining module 320 and the third transmitting module 330 may be program modules, and after the program modules are executed by the processor, the functions of the above modules can be realized.

In the present invention, the third receiving module 310, the second determining module 320 and the third transmitting module 330 may be a combination of software and hardware modules. The combination of the software and hardware modules includes, but is not limited to, various programmable arrays. The programmable array includes, but is not limited to, a field programmable array and/or a complex programmable array.

In the present invention, the third receiving module 310, the second determining module 320 and the third transmitting module 330 may be pure hardware modules. The pure hardware module includes, but is not limited to, an application specific integrated circuit.

The second determining module 320 is further configured to: according to the target information of the sensing target carried in the sensing service query, select the target base station capable of providing the sensing service from base stations in an area indicated by the target information.

The sensing service query further includes: quality of service (QoS) information. Determining the target base station according to the sensing service query includes: selecting the target base station according to the target information of the sensing target carried in the sensing service query, where the target base station is a base station capable of providing the sensing service of the QoS information.

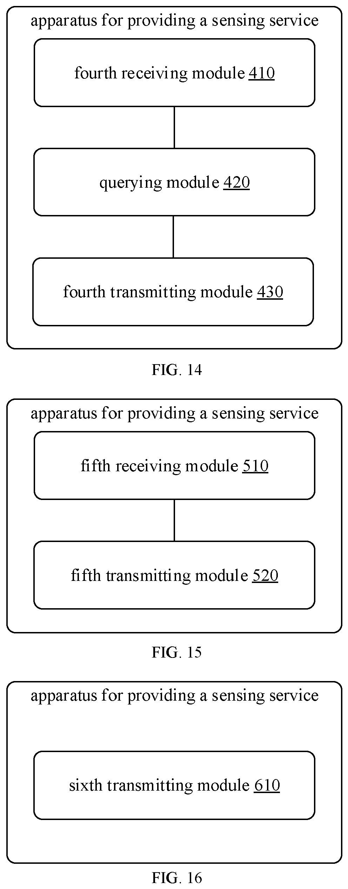

As shown in FIG. 14, the present invention provide an apparatus for providing a sensing service, performed by an UDM, including: a fourth receiving module 410 configured to receive a query request from a sensing function (SF), where the query request includes: identification information of an initiator of the sensing service; a querying module 420 configured to query the initiator according to the identification information of the initiator; and a fourth transmitting module 430 configured to transmit a query result to the SF.

The fourth receiving module 410, the querying module 420 and the fourth transmitting module 430 may be program modules, and after the program modules are executed by the processor, the functions of the above modules can be realized.

In the present invention, the fourth receiving module 410, the querying module 420 and the fourth transmitting module 430 may be a combination of software and hardware modules. The combination of the software and hardware modules includes, but is not limited to, various programmable arrays. The programmable array includes, but is not limited to, a field programmable array and/or a complex programmable array.

In the present invention, the fourth receiving module 410, the querying module 420 and the fourth transmitting module 430 may be pure hardware modules. The pure hardware module includes, but is not limited to, an application specific integrated circuit.

The query request further includes sensing model information for indicating a sensing model expected to be used for the sensing service, and the fourth transmitting module 430 is configured to transmit the query result to the SF according to the identification information of the initiator and the sensing model information.

The query request further includes quality of service (QoS) information, and the fourth transmitting module 430 is configured to transmit the query result to the SF according to the identification information of the initiator and the QoS information.

As shown in FIG. 15, the present invention provide an apparatus for providing a sensing service, performed by a PCF, including: a fifth receiving module 510 configured to receive a policy request from a sensing function (SF), where the policy request includes: identification information of an initiator of the sensing service; and a fifth transmitting module 520 configured to transmit a policy response to the SF according to the identification information of the initiator, where the policy response is used for the SF to determine a sensing parameter of the sensing service.

The fifth receiving module 510 and the fifth transmitting module 520 may be program modules, and after the program modules are executed by the processor, the functions of the above modules can be realized.

In the present invention, the fifth receiving module 510 and the fifth transmitting module 520 may be a combination of software and hardware modules. The combination of the software and hardware modules includes, but is not limited to, various programmable arrays. The programmable array includes, but is not limited to, a field programmable array and/or a complex programmable array.

In the present invention, the fifth receiving module 510 and the fifth transmitting module 520 may be pure hardware modules. The pure hardware module includes, but is not limited to, an application specific integrated circuit.

The policy response includes: a policy parameter; and the policy parameter is used for the SF to determine the sensing parameter.

As shown in FIG. 16, the present invention provide an apparatus for providing a sensing service, performed by an application function (AC) or an initiator of the sensing service, including: a sixth transmitting module 610 configured to transmit a sensing request to a sensing function (SF), where the sensing request at least includes: identification information of an initiator, at least configured to verify the initiator of the sensing service, and the sensing request is used to request the SF to select a target base station for providing the sensing service.

The sixth transmitting module 610 may be program modules, and after the program modules are executed by the processor, the functions of the above modules can be realized.

In the present invention, the sixth transmitting module 610 may be a combination of software and hardware modules. The combination of the software and hardware modules includes, but is not limited to, various programmable arrays. The programmable array includes, but is not limited to, a field programmable array and/or a complex programmable array.

In the present invention, the sixth transmitting module 610 may be a pure hardware module. The pure hardware module includes, but is not limited to, an application specific integrated circuit.

The sensing request further includes at least one of the followings: address information of the AF or the initiator, where the address information is used for the target base station to establish a sensing data transmission link with the AF or the initiator; target information of a sensing target; quality of service (QoS) information, at least used to indicate a QoS of the sensing service; sensing model information, indicating a sensing model expected to be used by the AF or the initiator.

The sixth transmitting module 610 is configured to transmit the sensing request to the SF via a network exposure function (NEF).

Embodiments of the present invention provide a communication device, including: a memory for storing processor-executable instructions; a processor connected to the memory. The processor is configured to perform the method for providing the sensing service according to any of the foregoing technical solutions.

The processor may include various types of storage media, which are non-transitory computer storage media, and can continue to memorize and store information thereon after the communication device is powered off.

The communication device includes an access device or a UE or a core network device.

The processor may be connected to the memory through a bus for reading the executable program stored on the memory, and to perform, for example, at least one of the methods shown in FIG. 2, FIG. 6 to FIG. 10 and FIG. 17.

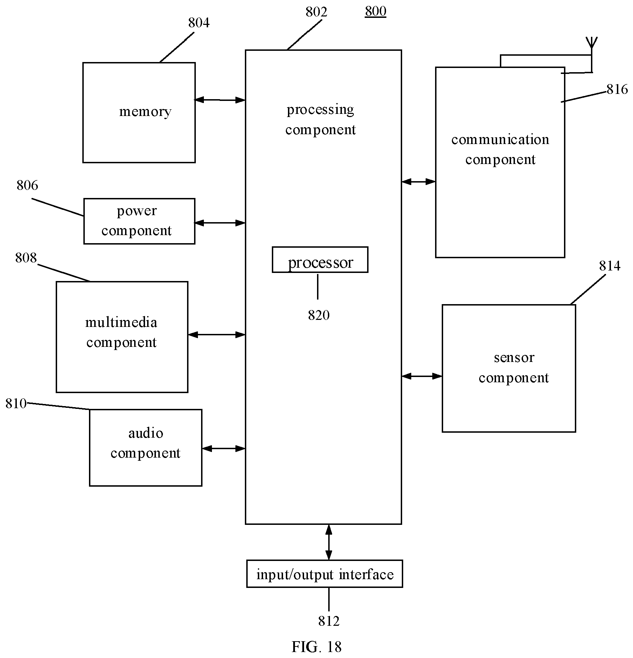

FIG. 18 is a block diagram showing a UE 800. For example, the UE 800 may be a mobile phone, a computer, a digital broadcast terminal, a messaging device, a game console, a tablet device, a medical device, a fitness device, a personal digital assistant, or the like.

Referring to FIG. 18, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, phone calls, data communications, camera operations, and recording operations. The processing component 802 may include one or more processors 820 to execute instructions to perform all or some of the steps in the above-described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. The screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. The multimedia component 808 includes a front camera and/or a rear camera. The front camera and/or the rear camera may receive an external multimedia datum while the UE 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. The audio component 810 further includes a speaker to output audio signals.

The I/O interface 812 provides an interface between the processing component 802 and peripheral interface modules, such as keyboards, click wheels, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may further include a light sensor, such as a CMOS or CCD image sensor, for use in imaging applications. The sensor component 814 may further include an accelerometer sensor, a gyroscope sensor, a magnetic sensor, a pressure sensor, or a temperature sensor.

The communication component 816 is configured to facilitate communication, wired or wireless, between the UE 800 and other devices. The UE 800 may access a wireless network based on a communication standard, such as Wi-Fi, 2G, or 3G, or a combination thereof. In the present invention , the communication component 816 receives a broadcast signal or broadcast associated information from an external broadcast management system via a broadcast channel. The communication component 816 further includes a near field communication (NFC) module to facilitate short-range communications. For example, the NFC module may be implemented based on a radio frequency identifier (RFID) technology, an infrared data association (IrDA) technology, an ultra-wideband (UWB) technology, a Bluetooth (BT) technology, and other technologies.

In the present invention , the UE 800 may be implemented with one or more of an application specific integrated circuits (ASIC), a digital signal processor (DSP), a digital signal processing device (DSPD), a programmable logic device (PLD), a field programmable gate array (FPGA), a controller, a microcontroller, a microprocessor, or other electronic elements, for performing the above-mentioned method.

In the present invention , there is also provided a non-transitory computer readable storage medium including instructions, such as included in the memory 804, executable by the processor 820 in the UE 800, for completing the above-mentioned method. For example, the non-transitory computer-readable storage medium may be a ROM, a random access memory (RAM), a CD-ROM, a magnetic tape, a floppy disc, an optical data storage device, and the like.

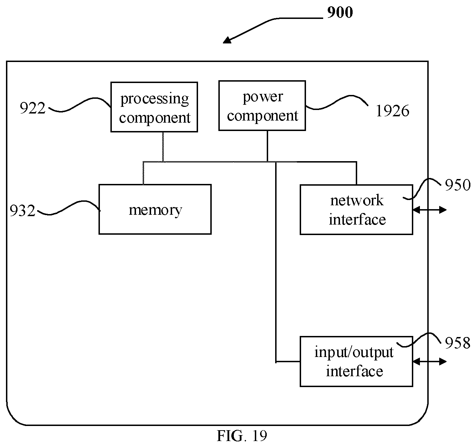

As shown in FIG. 19, the present invention provide a structure of an access device. For example, a communication device 900 may be provided as a network device. The communication device may be the aforementioned access device and/or core network device.

Referring to FIG. 19, the communication device 900 includes a processing component 922, which further includes one or more processors, and memory resources represented by a memory 932 for storing instructions executable by the processing component 922, such as an application program. The application program stored in the memory 932 may include one or more modules each corresponding to a set of instructions. In addition, the processing component 922 is configured to execute instructions to perform the above-mentioned method, for example, at least one of the methods shown in FIG. 2, FIG. 6 to FIG. 10 and FIG. 17.

The communication device 900 may further include a power component 926 configured to perform power management of the communication device 900, a wired or wireless network interface 950 configured to connect the device 900 to a network, and an input/output (I/O) interface 958. The communication device 900 may operate based on an operating system stored in the memory 932, such as Windows Server TM, Mac OS XTM, UnixTM, LinuxTM, FreeBSDTM, or the like.

## Claims

1. A method for transmitting a sensing parameter, performed by a sensing function, SF, the method comprising:
receiving (S210) a sensing request from an application function, AF, or an initiator of a sensing service;
determining (S220), according to the sensing request, a target base station and the sensing parameter for providing the sensing service; and
transmitting (S230) the sensing parameter to the target base station;
wherein the sensing request comprises: identification information of the initiator of the sensing service; and the method further comprises:
performing a verification according to the identification information of the initiator, wherein after the initiator is verified, the target base station of the sensing service and/or the sensing parameter are determined,
wherein performing the verification according to the identification information of the initiator comprises:
transmitting a query request to a user data management, UDM, according to the sensing request, wherein the query request comprises the identification information of the initiator of the sensing service; and
receiving a query result returned by the UDM.

2. The method according to claim 1, wherein the sensing request comprises:
target information, wherein the target information indicates an area of a sensing target;
determining, according to the sensing request, the target base station for providing the sensing service comprises:
transmitting a sensing service query to an access and mobility management function, AMF, wherein the sensing service query comprises the target information; and
receiving a sensing service response returned by the AMF, wherein the sensing service response comprises: an identification of the target base station, wherein the target base station is a base station within the area of the sensing target and capable of providing the sensing service.

3. The method according to claim 1, wherein the sensing request further comprises: quality of service, QoS, information for indicating a QoS of the sensing service,
wherein the sensing service query further comprises: the QoS information, and
wherein the target base station is a base station within the area of the sensing target and capable of providing the sensing service of the QoS information.

4. The method according to claim 1, wherein determining, according to the sensing request, the sensing parameter for providing the sensing service comprises:
determining the sensing parameter according to at least one of the sensing request and a policy parameter.

5. The method according to claim 4, wherein determining the sensing parameter according to at least one of the sensing request and the policy parameter comprises:
transmitting a policy request to a policy control function, PCF, according to the sensing request;
receiving a policy response returned by the PCF, wherein the policy response comprises the policy parameter provided by the PCF; and
determining the sensing parameter according to the policy response.

6. The method according to claim 5, wherein the sensing request comprises:
identification information of the initiator, and
the policy request comprises: the identification information of the initiator, and
the policy response is returned according to the identification information of the initiator.

7. The method according to any one of claims 1 to 6, further comprising:
receiving sensing data from the target base station;
obtaining a sensing result processed based on the sensing data; and
transmitting the sensing result to the AF or the initiator of the sensing service.

8. The method according to any one of claims 1 to 7, further comprising:
receiving sensing data from the target base station, and transmitting the sensing data to the AF or the initiator of the sensing service; or
receiving a sensing result from the target base station, and transmitting the sensing result to the AF or the initiator.

9. The method according to claim 1, wherein the sensing request is received from the AF or the initiator of the sensing service via a network exposure function.

10. The method according to claim 1, wherein the sensing request further comprises at least one of the followings:
address information of the AF or the initiator, wherein the address information is used for the target base station to establish a sensing data transmission link with the AF or the initiator;
target information of a sensing target;
QoS information, used to indicate a QoS of the sensing service;
sensing model information, indicating a sensing model expected to be used by the AF or the initiator.

11. The method according to claim 1, wherein the sensing parameter is used by the target base station to provide the sensing service; and the sensing service is provided by:
transmitting a sensing signal according to a transmitting parameter included in the sensing parameter,
obtaining sensing data by receiving, according to a receiving parameter included in the sensing parameter, a signal reflected from a sensing target sensed by the sensing signal, and/or
obtaining a sensing result by processing the sensing data according to a processing parameter included in the sensing parameter.

12. A method for transmitting a query result, performed by a user data management, UDM, the method comprising:
receiving (S410) a query request from a sending function, SF, wherein the query request comprises: identification information of an initiator of a sensing service;
querying (5420) the initiator according to the identification information of the initiator; and
transmitting (S430) the query result to the SF.

13. The method according to claim 12, wherein the query request further comprises: sensing model information for indicating a sensing model expected to be used for the sensing service and/or QoS information, and
transmitting (S430) the query result to the SF comprises:
transmitting the query result to the SF according to the identification information of the initiator, and the sensing model information and/or the QoS information.

14. A communication device, comprising: a processor (820), a transceiver, a memory (804), and an executable program stored in the memory (804) and capable of being executed by the processor (820), wherein the executable program is executed by the processor (820) to perform the method according to any one of claims 1 to 13.

15. A computer storage medium having stored therein an executable program that, when said program is run on a communication device of claim 14, enable the communication device to perform the method according to any one of claims 1 to 13.

## Patentansprüche

1. Ein Verfahren zum Senden eines Erfassungsparameters, durchgeführt von einer Sensing-Funktion, SF, wobei das Verfahren umfasst:
Empfangen (S210) einer Sensing-Anfrage von einer Anwendungsfunktion, AF, oder einem Initiator eines Sensing-Dienstes;
Bestimmen (S220), gemäß der Sensing-Anfrage, einer Ziel-Basisstation und des Erfassungsparameters zum Bereitstellen des Sensing-Dienstes; und
Senden (S230) des Erfassungsparameters an die Ziel-Basisstation;
wobei die Sensing-Anfrage umfasst: Identifikationsinformationen des Initiators des Sensing-Dienstes; und das Verfahren ferner umfasst:
Durchführen einer Verifizierung gemäß den Identifikationsinformationen des Initiators, wobei, nachdem der Initiator verifiziert ist, die Ziel-Basisstation des Sensing-Dienstes und/oder der Erfassungsparameter bestimmt werden, wobei
Durchführen der Verifizierung gemäß den Identifikationsinformationen des Initiators umfasst:
Senden einer Abfrageanfrage an ein Benutzerdatenmanagement, UDM, gemäß der Sensing-Anfrage, wobei die Abfrageanfrage die Identifikationsinformationen des Initiators des Sensing-Dienstes umfasst; und
Empfangen eines durch das UDM zurückgegebenen Abfrageergebnisses.

2. Das Verfahren nach Anspruch 1, wobei die Sensing-Anfrage umfasst: Zielinformationen, wobei die Zielinformationen einen Bereich eines Sensing-Ziels angeben;
Bestimmen, gemäß der Sensing-Anfrage, der Ziel-Basisstation zum Bereitstellen des Sensing-Dienstes umfasst:
Senden einer Sensing-Dienst-Abfrage an eine Zugangs- und Mobilitätsmanagementfunktion, AMF, wobei die Sensing-Dienst-Abfrage die Zielinformationen umfasst; und
Empfangen einer durch die AMF zurückgegebenen Sensing-Dienst-Antwort, wobei die Sensing-Dienst-Antwort umfasst: eine Identifikation der Ziel-Basisstation, wobei die Ziel-Basisstation eine Basisstation innerhalb des Bereichs des Sensing-Ziels ist und in der Lage ist, den Sensing-Dienst bereitzustellen.

3. Das Verfahren nach Anspruch 1, wobei die Sensing-Anfrage ferner umfasst: Dienstgüte, QoS, Informationen zum Angeben einer QoS des Sensing-Dienstes,
wobei die Sensing-Dienst-Abfrage ferner umfasst: die QoS-Informationen, und
wobei die Ziel-Basisstation eine Basisstation innerhalb des Bereichs des Sensing-Ziels ist und in der Lage ist, den Sensing-Dienst der QoS-Informationen bereitzustellen.

4. Das Verfahren nach Anspruch 1, wobei Bestimmen, gemäß der Sensing-Anfrage, des Erfassungsparameters zum Bereitstellen des Sensing-Dienstes umfasst:
Bestimmen des Erfassungsparameters gemäß mindestens einem von der Sensing-Anfrage und einem Richtlinienparameter.

5. Das Verfahren nach Anspruch 4, wobei Bestimmen des Erfassungsparameters gemäß mindestens einem von der Sensing-Anfrage und dem Richtlinienparameter umfasst:
Senden einer Richtlinienanfrage an eine Richtliniensteuerfunktion, PCF, gemäß der Sensing-Anfrage;
Empfangen einer durch die PCF zurückgegebenen Richtlinienantwort, wobei die Richtlinienantwort den durch die PCF bereitgestellten Richtlinienparameter umfasst; und
Bestimmen des Erfassungsparameters gemäß der Richtlinienantwort.

6. Das Verfahren nach Anspruch 5, wobei die Sensing-Anfrage umfasst:
Identifikationsinformationen des Initiators, und
die Richtlinienanfrage umfasst: die Identifikationsinformationen des Initiators, und
die Richtlinienantwort gemäß den Identifikationsinformationen des Initiators zurückgegeben wird.

7. Das Verfahren nach einem der Ansprüche 1 bis 6, ferner umfassend:
Empfangen von Sensing-Daten von der Ziel-Basisstation;
Erlangen eines Sensing-Ergebnisses, das basierend auf den Sensing-Daten verarbeitet wird; und
Senden des Sensing-Ergebnisses an die AF oder den Initiator des Sensing-Dienstes.

8. Das Verfahren nach einem der Ansprüche 1 bis 7, ferner umfassend:
Empfangen von Sensing-Daten von der Ziel-Basisstation und Senden der Sensing-Daten an die AF oder den Initiator des Sensing-Dienstes;
oder
Empfangen eines Sensing-Ergebnisses von der Ziel-Basisstation und Senden des Sensing-Ergebnisses an die AF oder den Initiator.

9. Das Verfahren nach Anspruch 1, wobei die Sensing-Anfrage von der AF oder dem Initiator des Sensing-Dienstes über eine Netzwerkexpositionsfunktion empfangen wird.

10. Das Verfahren nach Anspruch 1, wobei die Sensing-Anfrage ferner mindestens eines der Folgenden umfasst:
Adressinformationen der AF oder des Initiators, wobei die Adressinformationen für die Ziel-Basisstation verwendet werden, um eine Sensing-Datenübertragungsverbindung mit der AF oder dem Initiator herzustellen;
Zielinformationen eines Sensing-Ziels;
QoS-Informationen, verwendet zum Angeben einer QoS des Sensing-Dienstes;
Sensing-Modellinformationen, die ein Sensing-Modell angeben, dessen Verwendung durch die AF oder den Initiator erwartet wird.

11. Das Verfahren nach Anspruch 1, wobei der Erfassungsparameter durch die Ziel-Basisstation verwendet wird, um den Sensing-Dienst bereitzustellen; und der Sensing-Dienst bereitgestellt wird durch:
Senden eines Sensing-Signals gemäß einem Sendeparameter, der in dem Erfassungsparameter enthalten ist,
Erlangen von Sensing-Daten durch Empfangen, gemäß einem Empfangsparameter, der in dem Erfassungsparameter enthalten ist, eines Signals, das von einem Sensing-Ziel reflektiert wird, das durch das Sensing-Signal erfasst wird, und/oder
Erlangen eines Sensing-Ergebnisses durch Verarbeiten der Sensing-Daten gemäß einem Verarbeitungsparameter, der in dem Erfassungsparameter enthalten ist.

12. Ein Verfahren zum Senden eines Abfrageergebnisses, durchgeführt durch ein Benutzerdatenmanagement, UDM, wobei das Verfahren umfasst:
Empfangen (S410) einer Abfrageanfrage von einer Sendefunktion, SF, wobei die Abfrageanfrage umfasst: Identifikationsinformationen eines Initiators eines Sensing-Dienstes;
Abfragen (S420) des Initiators gemäß den Identifikationsinformationen des Initiators; und
Senden (S430) des Abfrageergebnisses an die SF.

13. Das Verfahren nach Anspruch 12, wobei die Abfrageanfrage ferner umfasst: Sensing-Modellinformationen zum Angeben eines Sensing-Modells, dessen Verwendung für den Sensing-Dienst erwartet wird, und/oder QoS-Informationen, und
Senden (S430) des Abfrageergebnisses an die SF umfasst:
Senden des Abfrageergebnisses an die SF gemäß den Identifikationsinformationen des Initiators und den Sensing-Modellinformationen und/oder den QoS-Informationen.

14. Eine Kommunikationsvorrichtung, umfassend: einen Prozessor (820), einen Sendeempfänger, einen Speicher (804) und ein ausführbares Programm, das in dem Speicher (804) gespeichert ist und durch den Prozessor (820) ausgeführt werden kann, wobei das ausführbare Programm durch den Prozessor (820) ausgeführt wird, um das Verfahren nach einem der Ansprüche 1 bis 13 durchzuführen.

15. Ein Computerspeichermedium, in dem ein ausführbares Programm gespeichert ist, das, wenn das Programm auf einer Kommunikationsvorrichtung nach Anspruch 14 ausgeführt wird, der Kommunikationsvorrichtung ermöglicht, das Verfahren nach einem der Ansprüche 1 bis 13 durchzuführen.

## Revendications

1. Un procédé de transmission d'un paramètre de détection, réalisé par une fonction de détection, SF, le procédé comprenant :
la réception (S210) d'une requête de détection provenant d'une fonction d'application, AF, ou d'un initiateur d'un service de détection ;
la détermination (S220), selon la requête de détection, d'une station de base cible et du paramètre de détection pour fournir le service de détection ; et
la transmission (S230) du paramètre de détection à la station de base cible ;
dans lequel la requête de détection comprend : des informations d'identification de l'initiateur du service de détection ; et le procédé comprend en outre :
la réalisation d'une vérification selon les informations d'identification de l'initiateur, dans lequel après que l'initiateur est vérifié, la station de base cible du service de détection et/ou le paramètre de détection sont déterminés, dans lequel
la réalisation de la vérification selon les informations d'identification de l'initiateur comprend :
la transmission d'une requête d'interrogation à une gestion de données utilisateur, UDM, selon la requête de détection, dans lequel la requête d'interrogation comprend les informations d'identification de l'initiateur du service de détection ; et
la réception d'un résultat d'interrogation renvoyé par l'UDM.

2. Le procédé selon la revendication 1, dans lequel la requête de détection comprend : des informations de cible, dans lequel les informations de cible indiquent une zone d'une cible de détection ;
la détermination, selon la requête de détection, de la station de base cible pour fournir le service de détection comprend :
la transmission d'une interrogation de service de détection à une fonction de gestion d'accès et de mobilité, AMF, dans lequel l'interrogation de service de détection comprend les informations de cible ; et
la réception d'une réponse de service de détection renvoyée par l'AMF, dans lequel la réponse de service de détection comprend : une identification de la station de base cible, dans lequel la station de base cible est une station de base dans la zone de la cible de détection et capable de fournir le service de détection.

3. Le procédé selon la revendication 1, dans lequel la requête de détection comprend en outre : des informations de qualité de service, QoS, pour indiquer une QoS du service de détection,
dans lequel l'interrogation de service de détection comprend en outre : les informations de QoS, et
dans lequel la station de base cible est une station de base dans la zone de la cible de détection et capable de fournir le service de détection des informations de QoS.

4. Le procédé selon la revendication 1, dans lequel la détermination, selon la requête de détection, du paramètre de détection pour fournir le service de détection comprend :
la détermination du paramètre de détection selon au moins l'une de la requête de détection et d'un paramètre de politique.

5. Le procédé selon la revendication 4, dans lequel la détermination du paramètre de détection selon au moins l'une de la requête de détection et du paramètre de politique comprend :
la transmission d'une requête de politique à une fonction de contrôle de politique, PCF, selon la requête de détection ;
la réception d'une réponse de politique renvoyée par la PCF, dans lequel la réponse de politique comprend le paramètre de politique fourni par la PCF ; et
la détermination du paramètre de détection selon la réponse de politique.

6. Le procédé selon la revendication 5, dans lequel la requête de détection comprend : des informations d'identification de l'initiateur, et
la requête de politique comprend : les informations d'identification de l'initiateur, et
la réponse de politique est renvoyée selon les informations d'identification de l'initiateur.

7. Le procédé selon l'une quelconque des revendications 1 à 6, comprenant en outre :
la réception de données de détection provenant de la station de base cible ;
l'obtention d'un résultat de détection traité sur la base des données de détection ; et
la transmission du résultat de détection à l'AF ou à l'initiateur du service de détection.

8. Le procédé selon l'une quelconque des revendications 1 à 7, comprenant en outre :
la réception de données de détection provenant de la station de base cible, et la transmission des données de détection à l'AF ou à l'initiateur du service de détection ;
ou
la réception d'un résultat de détection provenant de la station de base cible, et la transmission du résultat de détection à l'AF ou à l'initiateur.

9. Le procédé selon la revendication 1, dans lequel la requête de détection est reçue de l'AF ou de l'initiateur du service de détection via une fonction d'exposition de réseau.

10. Le procédé selon la revendication 1, dans lequel la requête de détection comprend en outre au moins l'un des éléments suivants :
des informations d'adresse de l'AF ou de l'initiateur, dans lequel les informations d'adresse sont utilisées pour que la station de base cible établisse une liaison de transmission de données de détection avec l'AF ou l'initiateur ;
des informations de cible d'une cible de détection ;
des informations de QoS, utilisées pour indiquer une QoS du service de détection ;
des informations de modèle de détection, indiquant un modèle de détection prévu pour être utilisé par l'AF ou l'initiateur.

11. Le procédé selon la revendication 1, dans lequel le paramètre de détection est utilisé par la station de base cible pour fournir le service de détection ; et le service de détection est fourni par :
la transmission d'un signal de détection selon un paramètre d'émission inclus dans le paramètre de détection,
l'obtention de données de détection par réception, selon un paramètre de réception inclus dans le paramètre de détection, d'un signal réfléchi depuis une cible de détection détectée par le signal de détection, et/ou
l'obtention d'un résultat de détection par traitement des données de détection selon un paramètre de traitement inclus dans le paramètre de détection.

12. Un procédé de transmission d'un résultat d'interrogation, réalisé par une gestion de données utilisateur, UDM, le procédé comprenant :
la réception (S410) d'une requête d'interrogation provenant d'une fonction d'envoi, SF, dans lequel la requête d'interrogation comprend : des informations d'identification d'un initiateur d'un service de détection ;
l'interrogation (S420) de l'initiateur selon les informations d'identification de l'initiateur ; et
la transmission (S430) du résultat d'interrogation à la SF.

13. Le procédé selon la revendication 12, dans lequel la requête d'interrogation comprend en outre : des informations de modèle de détection pour indiquer un modèle de détection prévu pour être utilisé pour le service de détection et/ou des informations de QoS, et
la transmission (S430) du résultat d'interrogation à la SF comprend :
la transmission du résultat d'interrogation à la SF selon les informations d'identification de l'initiateur, et les informations de modèle de détection et/ou les informations de QoS.

14. Un dispositif de communication, comprenant : un processeur (820), un émetteur-récepteur, une mémoire (804), et un programme exécutable stocké dans la mémoire (804) et capable d'être exécuté par le processeur (820), dans lequel le programme exécutable est exécuté par le processeur (820) pour réaliser le procédé selon l'une quelconque des revendications 1 à 13.

15. Un support de stockage informatique ayant stocké dans celui-ci un programme exécutable qui, lorsque ledit programme est exécuté sur un dispositif de communication selon la revendication 14, permet au dispositif de communication de réaliser le procédé selon l'une quelconque des revendications 1 à 13.
